# EUROPEAN PATENT APPLICATION

(11) **EP 2 876 290 A1**
(43) Date of publication of application: **27.05.2015**
(21) Application number: 13194491.0
(22) Date of filing: 26.11.2013
(51) Int. Cl.: F02M 25/022, F02M 25/12, F02D 21/02

(54) **Method for managing combustion within the combustion chamber of an internal combustion engine or a burner, internal combustion engine and burner**

(71) Applicant: Nanotechlab S.A., 1752 Villars-Sur-Glane (CH)
(72) Inventor: Toffoletto, Sandro, 1752 Villars-Sur-Glane (CH)
(74) Representative: Vittorangeli, Lucia

(57) **Abstract**

An internal combustion engine comprises at least one combustion chamber (2) and a supply system (3) for the combustion chamber (2) for the intake of fuel and comburent. A plant for the production of oxyhydrogen (8), in particular by means of the electrolysis of water, has an outlet (9) placed in communication with the supply system (3). Supply means for a fuel (11) comprising an emulsion of water in hydrocarbons, in particular diesel, biodiesel, dense fuel oil and the like, are placed in communication with the supply system (3).

## Description

The present invention concerns a method for managing combustion within a combustion chamber of an internal combustion engine or of a burner. The present invention furthermore concerns an internal combustion engine and a burner, for example of a boiler.

As is well known, when the combustion of hydrocarbons takes place at high temperature and in the presence of air, sub-products are generated such as nitrogen oxides (NOx) which constitute one of the principal sources of atmospheric pollution.

Furthermore, the combustion of hydrocarbons produces particulate (PM) consisting of solid particles with diameter from 10 to 100 microns, harmful for health.

Finally, when it is injected into the combustion chamber of the engine or burner, the fuel disperses into drops of varying sizes which, if they exceed a limit size, do not burn completely, releasing unburnt particles which reduce the efficiency of the combustion chamber, being deposited on the surfaces of the latter, and are emitted in the exhaust gases.

The use is known of emulsified fuels (in particular of emulsions of water in hydrocarbons such as diesel, biodiesel, dense fuel oil and the like) for reducing both the emission of NOx and the emission of particulate in the case of internal combustion engines, in particular diesel engines, of vehicles, ships or stationary plants for electricity production.

To the same end the use is also known of emulsified fuels in boilers.

The presence of water particles finely and stably dispersed in the hydrocarbon in fact allows better atomisation of the fuel thanks to vaporisation of the water particles within the emulsion, which further divides the fuel into smaller drops having a large total contact area with the comburent. Furthermore the vapourisation of the water present in the emulsion reduces the smokiness and the combustion temperature, also reducing NOx emissions.

Unfortunately the solution of using emulsified fuel is not free of disadvantages. In fact the reduction in the combustion temperature and therefore in the exhaust gases negatively influences the operation of antiparticulate filters (APF) fitted in the exhaust gas outlet duct. Furthermore, in the known systems the percentage of emulsified water in the fuel must be kept fairly limited to avoid increasing the quantity of unburnt fuel.

In this context, the technical task at the base of the present invention is to provide a method for managing combustion within a combustion chamber of an internal combustion engine or a burner which overcomes the drawbacks of the known art cited above. Similarly, the technical task at the base of the present invention is to propose an internal combustion engine and a burner which respectively overcome the disadvantages of the known art mentioned above.

In particular, it is an object of the present invention to enable a reduction in NOx and particulate without compromising the functionality of anti-particulate filters at the exhaust gas outlet, while limiting the emission of unburnt fuel.

A further object of the present invention is to increase the efficiency of combustion while furthermore reducing consumption of hydrocarbons for a given output.

Yet another object of the present invention is to compensate for the reduction in the combustion temperature as a result of the use of emulsified fuels or to increase the percentage of water in the hydrocarbon. The stated technical task and the specified objects are substantially attained by a method for managing combustion within a combustion chamber of an internal combustion engine or of a burner, comprising the technical characteristics set out in one or more of the accompanying claims. The stated technical task and the specified objects are substantially attained by an internal combustion engine and a burner comprising the technical characteristics set out in one or more of the accompanying claims.

The dependent claims correspond to different embodiments of the invention.

In accordance with a first aspect, the present invention concerns a method for managing combustion within a combustion chamber of an internal combustion engine or of a burner comprising:
- supplying the combustion chamber with a fuel comprising an emulsion of water in hydrocarbons, in particular diesel, biodiesel, dense fuel oil and the like;
- supplying the combustion chamber with a comburent comprising a mixture of hydrogen and oxygen gases in the atomic ratio 2 to 1, or oxyhydrogen, for example produced at the time by the electrolysis of water.

The use of an emulsion of water in hydrocarbons as a fuel in conjunction with supplying oxyhydrogen in the comburent makes it possible to obtain an unexpected synergistic effect while maintaining the advantages of the use of the fuel in emulsion (reduction in NOx and particulate) and limiting the disadvantages (production of unburnt fuel and reduction in the combustion temperature) thanks to the fact that it has been found that oxyhydrogen increases the speed of the flame and therefore the speed and effectiveness of combustion, causing a reduction in unburnt fuel while the combustion temperature remains substantially unchanged compared with conventional fuel supply (hydrocarbon not in emulsion and absence of oxyhydrogen). Overall, a reduction is anyway achieved in NOx, accompanied especially by a significant reduction in unburnt fuel and particulate. The temperature of the exhaust gases is practically unaltered, thus maintaining the efficiency of anti-particulate filters. Alternatively, instead of compensating for the reduction in the combustion temperature, oxyhydrogen makes it possible to use an emulsion comprising a greater percentage of water (up to over 25%).

Thanks to the presence of oxyhydrogen, the fuel is burnt more quickly and effectively even in the areas near the cylinder walls and in the central zone, which are normally colder than the remainder of the combustion chamber.

Furthermore, the hydrogen present in oxyhydrogen can bond with the additives used for improving and stabilising the hydrocarbon emulsion, contributing to improving effectiveness.

Finally, the high efficiency of combustion makes it possible to save hydrocarbon by up to 1/3 of the quantity of water.

Preferably the oxyhydrogen is injected into an intake manifold of an internal combustion engine.

This aspect makes it possible to use a conventional structure of engine and possibly to adapt existing engines.

Preferably the oxyhydrogen is injected downstream of a turbocharger of an internal combustion engine.

This aspect makes it possible to optimise the effect of the turbocharger without affecting its operation.

Preferably the oxyhydrogen is injected at an intercooler of an internal combustion engine, preferably at an intake of the intercooler designed for a temperature sensor.

This aspect makes it possible to use a conventional structure of engine and possibly to adapt existing engines without affecting the effectiveness of the known components.

Preferably the method comprises:
- measuring parameters indicative of the combustion within the combustion chamber and/or within the exhaust gases;
- monitoring the flow of oxyhydrogen in relation to the parameters measured and/or of the quantity of water in said emulsion; and/or
- monitoring the percentage of water in the emulsion in relation to the parameters measured.

In this way it is possible to obtain the best results in terms of eliminating pollutants, energy saving and effectiveness of combustion even following variations in operation and/or conditions of use.

In accordance with a second aspect, the present invention concerns an internal combustion engine comprising at least one combustion chamber, a supply system for the combustion chamber for the intake of fuel and comburent, a plant for the production of oxyhydrogen, in particular by means of the electrolysis of water, having an outlet placed in communication with the supply system, supply means for a fuel comprising an emulsion of water in hydrocarbons, in particular diesel, biodiesel, dense fuel oil and the like placed in communication with the supply system. Preferably the supply system comprises an intake manifold, and the outlet of the oxyhydrogen production plant is placed in communication with the intake manifold.

Preferably the supply system comprises a turbocharger and the outlet of the oxyhydrogen production plant is placed in communication with the supply system downstream of the turbocharger.

Preferably the supply system comprises an intercooler and the outlet of the oxyhydrogen production plant is placed in communication with the supply system at the intercooler, for example at an intake of the intercooler designed for a temperature sensor.

Preferably a control unit is provided, programmed for:
- measuring parameters indicative of the combustion within the combustion chamber and/or within the exhaust gases;
- monitoring the flow of oxyhydrogen in relation to the parameters measured and/or of the quantity of water in said emulsion; and/or
- monitoring the percentage of water in the emulsion in relation to the parameters measured.

In accordance with a third aspect, the present invention concerns a burner comprising at least one combustion chamber, a supply system for the combustion chamber for the intake of fuel and comburent, a plant for the production of oxyhydrogen, in particular by means of the electrolysis of water, having an outlet placed in communication with the supply system, and supply means for a fuel comprising an emulsion of water in hydrocarbons, in particular diesel, biodiesel, dense fuel oil and the like placed in communication with the supply system.

Preferably a control unit is provided, programmed for:
- measuring parameters indicative of the combustion within the combustion chamber and/or within the exhaust gases;
- monitoring the flow of oxyhydrogen in relation to the parameters measured and/or of the quantity of water in said emulsion; and/or
- monitoring the percentage of water in the emulsion in relation to the parameters measured.

Further characteristics and advantages of the present invention will become clearer from the indicative, and therefore non-limiting, description of a preferred but not exclusive embodiment of an internal combustion engine wherein there is implemented a method according to the present invention, as illustrated in the attached drawings, in which:

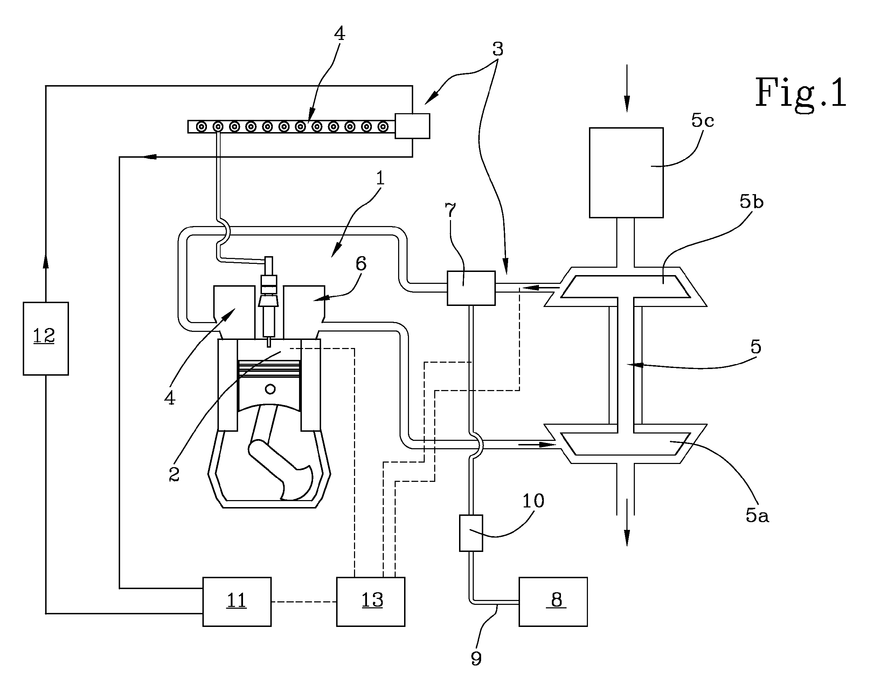

- figure 1 is a diagram of a turbocharged internal combustion engine;

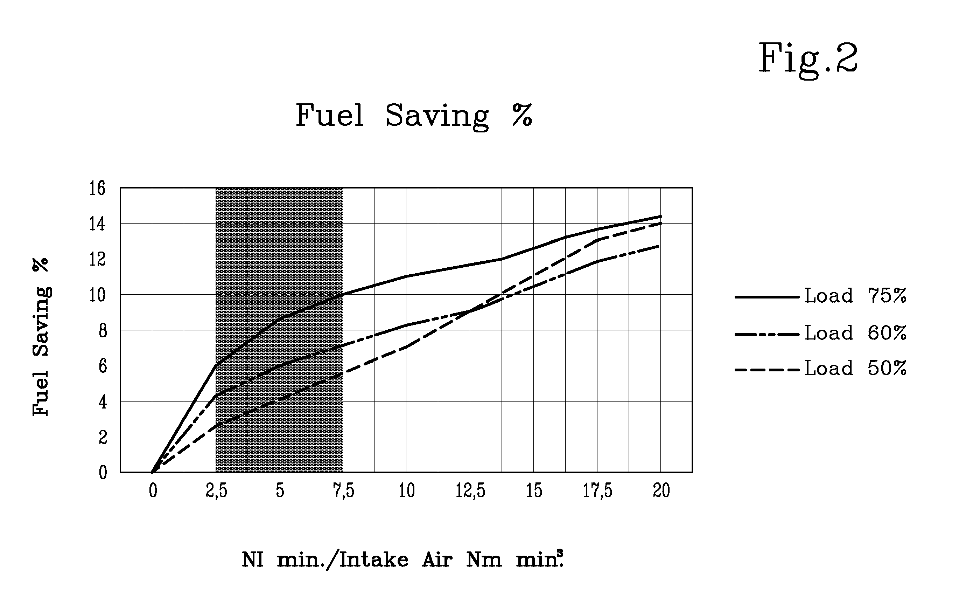

- figure 2 is a graph corresponding to the percentage fuel savings.

With reference to the attached drawing, reference 1 comprehensively indicates an internal combustion engine comprising at least one combustion chamber 2 and a supply system 3 for the combustion chamber for the intake of fuel and comburent.

The supply system 3 comprises an intake manifold 4 in communication with the combustion chamber(s).

The exhaust gases produced by the combustion are directed towards a turbocharger unit 5 via an exhaust manifold 6 arranged in communication with the combustion chamber(s).

The turbocharger unit 5 comprises a turbine 5a keyed onto the same shaft as a compressor 5b so as to exploit the rotation imparted to the turbine 5a by the exhaust gases to compress the intake air by means of the compressor 5b. Reference 5c indicates an intake air filter.

As a result of its rapid compression, the temperature of the air increases and consequently its density reduces, thus limiting the quantity of air aspirated by the engine. The intake air temperature is further increased as a result of the heat transfer from the exhaust gases within the turbocharger.

Reference 7 indicates an intercooler which can be fitted to reduce the air temperature, thus increasing the density, and to increase, for a given pressure, the quantity of comburent in the combustion chamber. Reference 8 indicates a plant for the production of oxyhydrogen, in particular by means of the electrolysis of water, having an outlet 9 placed in communication with the supply system 3.

Oxyhydrogen is a mixture of hydrogen and oxygen gases in the atomic ratio 2 to 1. The oxyhydrogen production plant 8 can for example comprise at least one electrolytic cell for producing oxyhydrogen from the hydrolysis of water. The cell comprises a plurality of plate electrodes immersed in an electrolyte. The electrodes can be connected to a source of direct or alternating current through respective terminals. One or more bubble apparatuses (bubblers) in water can be connected directly in series to the gas outlet to capture a quantity of electrolyte therein.

The oxyhydrogen can be injected under pressure into the supply system, for example at a pressure of about 8 bar.

In accordance with a possible embodiment, not illustrated, the outlet 9 of the oxyhydrogen production plant 8 is placed in communication with the intake manifold 4. Reference 10 indicates a flashback prevention device.

If the turbocharger is specified for example as in the attached diagram, the outlet 9 of the oxyhydrogen production plant 8 is placed in communication with the supply system 3 downstream of the turbocharger 5.

If the intercooler is specified for example as in the attached diagram, the outlet 9 of the oxyhydrogen production plant 8 is placed in communication with the supply system 3 at the intercooler 7. Advantageously, in the event that the intercooler 7 comprises an inlet for a temperature sensor, the outlet 9 of the oxyhydrogen production plant 8 is placed in communication with the supply system 3 at this inlet, replacing the temperature sensor. Reference 11 indicates supply means for a fuel comprising an emulsion of water in hydrocarbons, in particular diesel, biodiesel, dense fuel oil and the like, placed in communication with the supply system 3.

In particular in the case of ships' engines or stationary plants for producing electricity, the supply means 11 can comprise one or more static and/or dynamic mixers for example fitted along a duct connected to at least one tank with a water intake and an intake for a hydrocarbon possibly with additives suitable for favouring and stabilising the emulsion. The mixture of water and hydrocarbon contained in the tank is drawn up several times using pumping means so as to pass several times through the mixer(s) until the micelles reach sufficiently small dimensions and are uniformly distributed in the emulsion. Alternatively the supply means 11 comprise a tank of emulsified fuel.

Reference 12 indicates a fuel filter.

The internal combustion engine can comprise a control unit 13 programmed for:
- measuring parameters indicative of the combustion within the combustion chamber 2 and/or within the exhaust gases;
- monitoring the flowrate of oxyhydrogen in relation to the parameters measured and/or of the quantity of water in the emulsion; and/or
- monitoring the percentage of water in the emulsion in relation to the parameters measured.

In accordance with a possible aspect, the present invention concerns a burner for example of a boiler comprising at least one combustion chamber and a supply plant arranged in communication with the combustion chamber for the intake of fuel and comburent. A plant for the production of oxyhydrogen, in particular by means of the electrolysis of water, has an outlet placed in communication with the supply system. The oxyhydrogen production plant can be constructed as previously described with reference to the internal combustion engine.

Supply means for a fuel comprising an emulsion of water in hydrocarbons, in particular diesel, biodiesel, dense fuel oil and the like, are placed in communication with said supply system. These supply means can be constructed as previously described with reference to the internal combustion engine.

The burner can comprise a control unit programmed for:
- measuring parameters indicative of the combustion within the combustion chamber and/or within the exhaust gases;
- monitoring the flow of oxyhydrogen in relation to the parameters measured and/or of the quantity of water in the emulsion; and/or
- monitoring the percentage of water in the emulsion in relation to the parameters measured.

In accordance with one aspect, the present invention concerns a method for managing combustion within a combustion chamber 2 of an internal combustion engine 1 or of a burner. The internal combustion engine and the burner can be constructed as previously described.

The method for managing the combustion within the combustion chamber envisages supplying the combustion chamber with a fuel comprising an emulsion of water in hydrocarbons, in particular diesel, biodiesel, dense fuel oil and the like. Advantageously it is furthermore envisaged to supply the combustion chamber with a comburent comprising a mixture of hydrogen and oxygen gases in the atomic ratio 2 to 1, or oxyhydrogen, preferably produced by electrolysis of water.

In particular the oxyhydrogen can be injected into an intake manifold of an internal combustion engine. Alternatively the oxyhydrogen can be injected downstream of a turbocharger of an internal combustion engine, preferably at an intercooler. In this case the oxyhydrogen can be injected at an intake to the intercooler designed for a temperature sensor.

In accordance with a possible embodiment, the method according to the present invention provides for:
- measuring parameters indicative of the combustion within the combustion chamber and/or within the exhaust gases;
- monitoring the flow of oxyhydrogen in relation to the parameters measured and/or of the quantity of water in said emulsion; and/or
- monitoring the percentage of water in the emulsion in relation to the parameters measured.

Advantageously the emulsion can actually comprise a quantity of water up to about 25% of the hydrocarbon or more.

Preferably the flow of oxyhydrogen is equal to 2.5-20 litres compared with the flow of air (preferably 2.5-7.5 litres) per 1000 litres of aspirated air (4 or 20 per thousand).

The quantity and the pressure of the oxyhydrogen are a function of the revolutions per minute of the motor and of the aspirated air.

## Claims

1. A method for managing the combustion within a combustion chamber (2) of an internal combustion engine (1) or of a burner, comprising:
- supplying the combustion chamber (2) with a fuel comprising an emulsion of water in hydrocarbons, in particular diesel, biodiesel, dense fuel oil and the like;
- supplying the combustion chamber (2) with a comburent comprising a mixture of hydrogen and oxygen gases in the atomic ratio 2 to 1, or oxyhydrogen, preferably produced at the time by the electrolysis of water.

2. The method according to claim 1, wherein the oxyhydrogen is injected into an intake manifold (4) of an internal combustion engine (1).

3. The method according to claim 1, wherein the oxyhydrogen is injected downstream of a turbocharger (5) of an internal combustion engine (1).

4. The method according to claim 3, wherein the oxyhydrogen is injected at an intercooler (7) of an internal combustion engine (1), preferably at an intake of the intercooler designed for a temperature sensor.

5. The method according to one or more of claims 1-4, comprising:
- measuring parameters indicative of the combustion within the combustion chamber (2) and/or within the exhaust gases;
- monitoring the flow of oxyhydrogen in relation to the parameters measured and/or of the quantity of water in said emulsion; and/or
- monitoring the percentage of water in said emulsion in relation to the parameters measured.

6. An internal combustion engine comprising at least one combustion chamber (2), a supply system (3) for said combustion chamber (2) for the intake of fuel and comburent, a plant for the production of oxyhydrogen (8), in particular by means of the electrolysis of water, having an outlet (9) placed in communication with said supply system (3), and supply means for a fuel (11) comprising an emulsion of water in hydrocarbons, in particular diesel, biodiesel, dense fuel oil and the like placed in communication with the supply system (3).

7. An internal combustion engine according to claim 6, wherein said supply system (3) comprises an intake manifold (4) and wherein said outlet (9) of the oxyhydrogen production plant (8) is placed in communication with said intake manifold (4).

8. An internal combustion engine according to claim 6, wherein said supply system (3) comprises a turbocharger (5) and wherein said outlet (9) of the oxyhydrogen production plant (8) is placed in communication with said supply system (3) downstream of the turbocharger (5).

9. The internal combustion engine according to claim 6, wherein said supply system (3) comprises an intercooler (7) and wherein said outlet (9) of the oxyhydrogen production plant (8) is placed in communication with said supply system (3) at said intercooler (7), for example at an inlet to the intercooler designed for a temperature sensor.

10. The internal combustion engine according to one or more of claims 6-9 comprising a control unit (17) programmed for:
- measuring parameters indicative of the combustion within the combustion chamber (2) and/or within the exhaust gases;
- monitoring the flow of oxyhydrogen in relation to the parameters measured and/or of the quantity of water in said emulsion; and/or
- monitoring the percentage of water in said emulsion in relation to the parameters measured.

11. A burner comprising at least one combustion chamber, a supply system for said combustion chamber for the intake of fuel and comburent, a plant for the production of oxyhydrogen, in particular by means of the electrolysis of water, having an outlet placed in communication with said supply system, and supply means for a fuel comprising an emulsion of water in hydrocarbons, in particular diesel, biodiesel, dense fuel oil and the like placed in communication with said supply system.

12. The burner according to claim 11, comprising a control unit programmed for:
- measuring parameters indicative of the combustion within the combustion chamber and/or within the exhaust gases;
- monitoring the flow of oxyhydrogen in relation to the parameters measured and/or of the quantity of water in said emulsion; and/or
- monitoring the percentage of water in said emulsion in relation to the parameters measured.
